# EUROPÄISCHE PATENTANMELDUNG

(11) **EP 4 206 100 A1**
(43) Veröffentlichungstag der Anmeldung: **05.07.2023**
(21) Anmeldenummer: 22214564.1
(22) Anmeldetag: 19.12.2022
(51) Int. Cl.: B65G 47/86

(54) **TRANSPORTSTERN ZUM TRANSPORTIEREN VON BEHÄLTERN**

(30) Priorität: 21.12.2021 DE 102021134069
(71) Anmelder: KRONES AG, 93073 Neutraubling (DE)
(72) Erfinder: SCHOENFELDER, Markus, 93073 Neutraubling (DE)
(74) Vertreter: v. Bezold & Partner Patentanwälte - PartG mbB

(57) **Zusammenfassung**

Die Erfindung betrifft u.a. einen Transportstern (14), vorzugsweise Absenkstern, zum Transportieren von Behältern (12), aufweisend mehrere Behälterhalterungen (46), die um einen Umfang des Transportsterns (14) angeordnet sind und umlaufend um eine Mittelachse (M) des Transportsterns (14) entlang eines Bewegungspfads (25) bewegbar und dabei von einem Behältereinlaufbereich (24) des Bewegungspfads (25) zu einem Behälterauslaufbereich (26) des Bewegungspfads (25) absenkbar und/oder anhebbar sind. Der Transportstern (14) weist ferner eine Betätigungseinrichtung (48) mit einer Steuerkurve (58), die als eine Zylindermantelfläche gebildet ist, und mehreren Verbindungseinrichtungen (60), die jeweils eine Wirkverbindung zwischen der Steuerkurve (58) und einer der mehreren Behälterhalterungen (46) zum Betätigen der jeweiligen Behälterhalterung (46) herstellen, auf.

## Beschreibung

### Technisches Gebiet

Die Erfindung betrifft einen Transportstern, vorzugsweise Absenkstern, zum Transportieren von Behältern. Die Erfindung betrifft zudem eine Behälterbehandlungsanlage mit einem Transportstern.

### Technischer Hintergrund

Herkömmlich können im Neckhandling transportierte Behälter nach dem Verschließprozess über eine Absenkrutsche auf ein erforderliches Transportbandniveau abgesenkt werden. Besonders hohe Behälter werden teilweise auch auf das erforderliche Transportbandniveau angehoben. Zum Absenken der Behälter kann beispielsweise eine Absenkrutsche verwendet werden. Eine Absenkrutsche ist eine feste Komponente, welche für Behälterformatwechsel als ein Wechselteil ausgeführt ist. Nachteilig an dieser Technik ist der hohe Zeitverlust, der beim Austausch des Wechselteils und den anschließenden Hygienemaßnahmen auftritt.

Alternativ gibt es die Möglichkeit, die Behälter über ein höhenverstellbares Rampentransportbandsystem auf das notwendige Transportbandniveau zu bringen. Nachteilig an dieser Technik ist, dass das höhenverstellbare Rampentransportbandsystem sehr viel Bauraum benötigt, da es eine Länge von bis zu 6 m oder mehr benötigen kann, um die Behälter auf das erforderliche Transportbandniveau abzusenken.

Außerdem ist es bekannt, Transportsterne als Absenksterne auszuführen, die während ihrer Drehung die Behälter auf das erforderliche Transportbandniveau absenken. Eine solche Technik ist beispielsweise aus der DE 195 12 515 A1 und der US 2004/0065525 A1 bekannt. Ein Nachteil dieser Technik besteht in der oft mangelnden Flexibilität.

Der Erfindung liegt die Aufgabe zu Grunde, einen verbesserten Transportstern, vorzugsweise Absenkstern, zu schaffen.

### Zusammenfassung der Erfindung

Die Aufgabe wird gelöst durch die Merkmale des unabhängigen Anspruchs 1. Vorteilhafte Weiterbildungen sind in den abhängigen Ansprüchen und der Beschreibung angegeben.

Ein Aspekt der vorliegenden Offenbarung betrifft einen Transportstern, vorzugsweise Absenkstern, zum Transportieren von Behältern. Der Transportstern weist mehrere Behälterhalterungen auf, die um einen Umfang des Transportsterns angeordnet sind (z. B. in gleichmäßigen Abständen). Die mehreren Behälterhalterungen sind umlaufend um eine Mittelachse des Transportsterns entlang eines, vorzugsweise verstellbaren, (z. B. im Wesentlichen ringförmigen) Bewegungspfads bewegbar und dabei von einem, vorzugsweise höhenverstellbaren, Behältereinlaufbereich (z. B. zur Übernahme von Behälter) des Bewegungspfads zu einem, vorzugsweise höhenverstellbaren, Behälterauslaufbereich (z. B. zur Übergabe der übernommenen Behälter) des Bewegungspfads (z. B. wahlweise) absenkbar und/oder anhebbar. Der Transportstern weist ferner eine Betätigungseinrichtung mit einer (z. B. feststehenden) Steuerkurve auf, die als eine Zylindermantelfläche (z. B. Zylinderau-ßenmantelfläche oder Zylinderinnenmantelfläche) gebildet ist. Die Betätigungseinrichtung weist ferner mehrere Verbindungseinrichtungen auf, die jeweils eine Wirkverbindung zwischen der Steuerkurve und einer der mehreren Behälterhalterungen zum Betätigen (z. B. Öffnen und/oder Schließen) der jeweiligen Behälterhalterung herstellen.

Es ist möglich, dass der Bewegungspfad der Behälterhalterungen derart verstellbar ist, dass unterschiedlich hohe Behälter im Behältereinlaufbereich übernommen und im Behälterauslaufbereich übergeben werden können. Vorteilhaft kann die Betätigungseinrichtung durch Ausführung der Steuerkurve als eine Zylindermantelfläche eine Betätigung der Behälterhalterungen unabhängig von einer Höheneinstellung des Bewegungspfads der Behälterhalterungen steuern. Allerdings kann die Technik bezüglich der Ausführung der Steuerkurve als eine zylindrische (z. B. Außen- oder Innen- ) Mantelfläche auch unabhängig von einem Vorhandensein einer Höhenverstellbarkeit des Bewegungspfads der Behälterhalterungen genutzt werden, z. B. um eine Montage zu erleichtern, eine Feinsteinstellung der Betätigungseinrichtung zu vereinfachen, eine Zugänglichkeit zur Steuerkurve zu verbessern oder eine Teilevielfalt bezüglich der Steuerkurve für unterschiedlich eingestellte Absenksterne zu verringern.

Vorzugsweise kann eine Höhenposition des Behältereinlaufbereichs höher sein als eine Höhenposition des Behälterauslaufbereichs. Es ist aber auch möglich, dass der Transportstern derart einstellbar ist (z. B. mittels einer Höhenverstelleinrichtung), dass eine Höhenposition des Behälterauslaufbereichs höher ist als eine Höhenposition des Behältereinlaufbereichs, z. B. beim Transport von sehr hohen Behältern.

Beispielsweise kann Transportstern verstellbar sein zwischen einer Einstellung, bei der die Behälterhalterungen des Transportsterns von dem Behältereinlaufbereich zu dem Behälterauslaufbereich abgesenkt werden, und einer weiteren Einstellung, bei der die Behälterhalterungen des Transportsterns von dem Behältereinlaufbereich zu dem Behälterauslaufbereich angehoben werden.

In einem Ausführungsbeispiel weisen die mehreren Verbindungseinrichtungen jeweils ein Führungselement (z. B. eine Rolle oder einen Gleitschuh) auf, das umlaufend um die Mittelachse (z. B. außen oder innen) an der Steuerkurve der Betätigungseinrichtung entlang eines Bewegungspfads geführt ist, der vorzugsweise abhängig von einem Höhenverlauf des Bewegungspfads der Behälterhalterungen, einer Höhenposition des Behältereinlaufbereichs und/oder einer Höhenposition des Behälterauslaufbereichs (z. B. selbsttätig) veränderbar ist (z. B. gekoppelt mit einer Höhenverstelleinrichtung). Vorzugsweise kann damit ein besonders flexibel einsetzbarer Transportstern, vorzuweise Absenkstern, geschaffen werden, der eine gesteuerte Betätigung der Behälterhalterungen ermöglicht.

Vorzugsweise kann die Steuerkurve der Betätigungseinrichtung eine bezüglich der Mittelachse gemessene Höhe aufweisen, die mindestens doppelt, mindestens dreimal, mindestens viermal oder mindestens fünfmal so groß ist wie eine bezüglich der Mittelachse gemessene Höhe des bzw. der Führungselemente, wobei sich die Höhe des bzw. der Führungselemente bevorzugt auf eine Höhe einer die Steuerkurve berührenden Kontaktfläche des bzw. der Führungselemente bezieht.

In einem weiteren Ausführungsbeispiel entspricht ein (z. B. veränderbarer) Höhenverlauf des Bewegungspfads der mehreren Behälterhalterungen im Wesentlichen einem Höhenverlauf des Bewegungspfads der mehreren Führungselemente der mehreren Verbindungseinrichtungen.

In einem weiteren Ausführungsbeispiel bewirkt eine (z. B. manuelle oder mittels mindestens eines Aktors bewirkte) Verstellung eines Höhenverlaufs des Bewegungspfads der mehreren Behälterhalterungen eine (z. B. entsprechende und/oder selbsttätige) Verstellung eines Höhenverlaufs des Bewegungspfads der mehreren Führungselemente der mehreren Verbindungseinrichtungen (z. B. durch eine Koppelung der Betätigungseinrichtung mit einer Höhenverstelleinrichtung).

In einem weiteren Ausführungsbeispiel weisen die mehreren Verbindungseinrichtungen jeweils mindestens einen Schwenkarm auf, der das Führungselement der jeweiligen Verbindungseinrichtung um eine, vorzugsweise im Wesentlichen vertikale oder horizontale, Achse schwenkbar lagert (z. B. zum Ermöglichen einer Radialbewegung des Führungselements bezüglich der Mittelachse).

In einer Ausführungsform weisen die mehreren Verbindungseinrichtungen jeweils ein Koppelgestänge auf, das eine Radialbewegung des Führungselements der jeweiligen Verbindungseinrichtung bezüglich der Mittelachse zu einer Vertikalbewegung (bzw. Hubbewegung) zum (zum Beispiel mittelbaren oder unmittelbaren) Betätigen der jeweiligen Behälterhalterung wandelt.

In einer weiteren Ausführungsform weisen die mehreren Behälterhalterungen jeweils mindestens einen (z. B. elastisch vorgespannt) Greiferarm auf, der zum Greifen und/oder Freigeben der Behälter (z. B. eines Behälterrumpfes der Behälter) mittels der Betätigungseinrichtung verschwenkbar und/oder verschiebbar ist.

In einer weiteren Ausführungsform weisen die mehreren Behälterhalterungen jeweils mindestens ein (z. B. elastisch vorgespanntes und/oder gabelförmiges) Spannelement auf, das zum Einspannen und/oder Freigeben der Behälter mittels der Betätigungseinrichtung vertikal bewegbar (z. B. verschiebbar und/oder verschwenkbar) ist (z. B. von oben auf einen Behälterrumpf der Behälter zum Einspannen pressbar).

In einer Ausführungsvariante weisen die mehreren Behälterhalterungen jeweils eine Stützplatte zum bodenseitigen Abstützen der Behälter oder zum Abstützen eines Behälterhalsrings der Behälter auf. Vorteilhaft kann der Transportstern somit entweder für ein sogenanntes Basehandling oder ein sogenanntes Neckhandling eingesetzt werden.

Es ist möglich, dass die mehreren Behälterhalterungen zum Halten eines Behälterrumpfes oder eines Behälterhalses der Behälter ausgebildet sind.

In einer weiteren Ausführungsvariante weist der Transportstern ferner eine Höhenverstelleinrichtung auf, die zum Verstellen eines Höhenverlaufs des Bewegungspfads der Behälterhalterungen, einer Höhenposition des Behältereinlaufbereichs und/oder einer Höhenposition des Behälterauslaufbereichs ausgebildet ist. Wie bereits eingangs erläutert, kann damit das durch die als Zylindermantelfläche ausgeführte Steuerkurve vorhandene Potential zur unabhängigen Betätigung der Behälterhalterungen voll ausgeschöpft werden.

In einem Ausführungsbeispiel weist die Höhenverstelleinrichtung eine, vorzugsweise ringförmige, Steuerkurve auf. Vorzugsweise kann die Höhenverstelleinrichtung zusätzlich mehrere Stützeinrichtungen aufweisen, die eine Wirkverbindung zwischen einer Höhenposition der mehreren Behälterhalterungen und der Steuerkurve herstellen. Optional kann die Höhenverstelleinrichtung ferner mindestens einen Aktor aufweisen, der mit der Steuerkurve der Höhenverstelleinrichtung zum Anpassen einer Neigung (z. B. Neigung zu einer Horizontalebene) und/oder einer Höhe der Steuerkurve der Höhenverstelleinrichtung verbunden ist, vorzugsweise zum Verstellen der Bewegungsbahn der Behälterhalterungen, einer Höhenposition des Behältereinlaufbereichs und/oder des Behälterauslaufbereichs.

In einem weiteren Ausführungsbeispiel weisen die mehreren Stützeinrichtungen jeweils einen, vorzugsweise rohrförmigen, Abschnitt auf, der koaxial zu einem Abschnitt der mehreren Verbindungseinrichtungen angeordnet ist. Vorzugsweise kann damit eine geschützte und bauraumsparende Anordnung für die Verbindungseinrichtungen geschaffen werden. Zudem können sich die Stützeinrichtungen und die Verbindungseinrichtungen bspw. eine Dichtung zum Abdichten zu einem Hygienebereich oder ein Durchgangsloch zum Hindurchführen der Stützeinrichtungen und der Verbindungseinrichtung teilen.

In einem weiteren Ausführungsbeispiel weisen die mehreren Stützeinrichtungen jeweils ein Führungselement auf, das umlaufend um die Mittelachse auf der Steuerkurve der Höhenverstelleinrichtung geführt ist.

Beispielsweise können sich Längsachsen der mehreren Stützeinrichtungen im Wesentlichen vertikal und/oder parallel zu der Mittelachse erstrecken.

In einem weiteren Ausführungsbeispiel gibt ein Höhenverlauf der Steuerkurve der Höhenverstelleinrichtung einen Höhenverlauf des Bewegungspfads der mehreren Behälterhalterungen vor.

In einem weiteren Ausführungsbeispiel sind die mehreren Stützeinrichtungen abgestützt auf der Steuerkurve (z. B auf einer Oberseite der Steuerkurve) der Höhenverstelleinrichtung und stützen jeweils eine der mehreren Behälterhalterungen von unten ab.

In einer Ausführungsform weist der Transportstern ferner eine, vorzugsweise im Wesentlichen scheibenförmige, (z. B. horizontal ausgerichtete) Tragplatte mit mehreren, vorzugsweise abgedichteten, Durchgangslöchern, die eine Unterseite der Tragplatte mit einer Oberseite der Tragplatte verbinden, auf. Vorzugsweise kann die Tragplatte sich im Betrieb zusammen mit den Behälterhalterungen um die Mittelachse drehen. Beispielsweise können die mehreren Behälterhalterungen oberhalb der Tragplatte angeordnet sein. Bevorzugt kann die Steuerkurve der Betätigungseinrichtung unterhalb der Tragplatte angeordnet sein. Optional können sich die mehreren Verbindungseinrichtungen (z. B. abgedichtet) durch die mehreren Durchgangslöcher hindurch erstrecken. Vorteilhaft kann damit ein hygienischer Aufbau des Transportsterns ermöglicht werden, bei dem ein Großteil der beweglichen Teile unterhalb der Tragplatte und damit getrennt von einem Hygienebereich oberhalb der Tragplatte angeordnet sein kann. Vorzugsweise kann damit ein Betrieb des Transportsterns in Aseptikanlagen ermöglicht werden.

In einer weiteren Ausführungsform erstrecken sich die mehreren Stützeinrichtungen durch die mehreren Durchgangslöcher. Alternativ oder zusätzlich ist die Steuerkurve der Höhenverstelleinrichtung unterhalb der Tragplatte angeordnet, vorzugsweise unterhalb von der Steuerkurve der Betätigungseinrichtung. Vorteilhaft kann damit einerseits eine platzsparende Anordnung geschaffen werden. Andererseits kann der bereits erwähnte hygienische Aufbau weiter unterstützt werden.

In einer weiteren Ausführungsform weist die Tragplatte an der Unterseite der Tragplatte mehrere ringförmige, einander umgebende Wandabschnitte (z. B. Wasserschlossschwerter) für eine hydraulische Dichtung, vorzugsweise ein Wasserschloss, auf, wobei die Wandabschnitte vorzugsweise im Wesentlichen koaxial zu der Mittelachse angeordnet sind. Vorteilhaft kann damit ebenfalls der hygienische Aufbau des Transportsterns weiter unterstützt werden.

In einer Ausführungsvariante ist eine Form der Steuerkurve der Betätigungseinrichtung, vorzugsweise flexibel, anpassbar. Optional kann die Steuerkurve der Betätigungseinrichtung mindestens ein manuell oder mittels mindestens eines Aktors bewegbares (z. B. zylindermantelsegmentförmiges) Steuerkurvensegment aufweisen. Vorteilhaft kann damit eine Betätigung der Behälterhalterungen verstellt werden, z. B. zur Feineinstellung.

Alternativ kann die Steuerkurve der Betätigungseinrichtung beispielsweise unveränderbar sein.

Vorzugsweise kann ein Verlauf der Steuerkurve mittels eines Fräsverfahrens gefertigt sein.

In einer weiteren Ausführungsvariante weisen die mehreren Behälterhalterungen jeweils ein (z. B. elastisch vorgespanntes) Schubelement (z. B. Schubstange) zum (z. B. unmittelbaren oder mittelbaren) Ausschieben des Behälters aus der jeweiligen Behälterhalterung auf. Optional können die die Schubelemente mittels der Betätigungseinrichtung betätigbar, besonders bevorzugt ein- und/oder ausschiebbar, sein. Vorteilhaft können damit die Behälter im Behälterauslaufbereich direkt auf einen Behälterförderer geschoben werden.

In einer weiteren Ausführungsvariante weist der Transportstern ferner eine Sensorik, vorzugsweise eine Wägezelle oder eine optische Erfassungseinrichtung (z. B. Kamera oder Abstandssensor), auf, wobei die Sensorik dazu ausgebildet ist, eine Information zu erfassen, die eine Orientierung eines zu orientierenden Behälters der mehreren Behälter angibt (z. B. eines in einer der Behälterhalterungen positionierten Behälters). Der Transportstern kann vorzugsweise ferner eine Antriebseinheit (z. B. je Behälterhalterung) aufweisen, die zum Drehen einer Stützplatte (z. B. eines Drehtellers) der mehreren Behälterhalterungen mit der Stützplatte verbunden ist. Optional kann der Transportstern zudem eine Steuereinheit aufweisen, die dazu konfiguriert ist, in Abhängigkeit von der erfassten Information der Sensorik die Antriebseinheit zum Drehen der Stützplatte zu steuern, sodass vorzugsweise der zu orientierende Behälter in eine vorgegebene Orientierung (bzw. Soll-Orientierung) gedreht wird. Vorteilhaft kann es damit möglich werden, von der Verschließvorrichtung empfangene unorientierte Behälter im Transportstern zu orientieren (auszurichten) und orientiert an den Behälterförderer weiterzugeben. Dadurch können vor allem Aseptikanlagen völlig ohne Garnituren und Behälterausrichtungen betrieben werden. Dies kann enorm Kosten sparen und die Maschinenverfügbarkeit steigern, da beispielsweise kein Bedienereingriff beim Sortenwechsel erforderlich ist.

Vorzugsweise kann der Transportstern in Ausführungsformen mit der Antriebseinheit zum Drehen der Stützplatte einen Schleifringübertrager aufweisen. Ansonsten kann der Transportstern bevorzugt ohne Schleifringübertrager ausgeführt sein.

Vorzugsweise kann sich der Begriff "Steuereinheit" auf eine Elektronik (z. B. ausgeführt als eine Treiberschaltung oder mit Mikroprozessor(en) und Datenspeicher) beziehen, die je nach Ausbildung Steuerungsaufgaben und/oder Regelungsaufgaben und/oder Verarbeitungsaufgaben übernehmen kann. Auch wenn hierin der Begriff "Steuern" verwendet wird, kann damit gleichsam zweckmäßig auch "Regeln" bzw. "Steuern mit Rückkopplung" und/oder "Verarbeiten" umfasst bzw. gemeint sein.

Ein weiterer Aspekt der vorliegenden Offenbarung betrifft eine Behälterbehandlungsanlage aufweisend einen Transportstern wie hierin offenbart. Die Behälterbehandlungsanlage kann ferner eine Verschließvorrichtung, vorzugsweise Verschließerkarussell, zum Verschließen der Behälter aufweisen, wobei die Verschließvorrichtung zum Übergeben der Behälter zu dem Behältereinlaufbereich angeordnet ist. Alternativ oder zusätzlich kann die Behälterbehandlungsanlage einen Behälterförderer, vorzugsweise Band- oder Mattenförderer, aufweisen, wobei der Behälterförderer zum Übernehmen der Behälter von dem Behälterauslaufbereich angeordnet ist.

Vorzugsweise kann die Behälterbehandlungsanlage zum Herstellen, Reinigen, Beschichten, Prüfen, Abfüllen, Verschließen, Etikettieren, Bedrucken und/oder Verpacken der Behälter ausgebildet sein.

Beispielsweise können die Behälter als Flaschen, Dosen, Kanister, Kartons, Flakons usw. ausgeführt sein.

Die zuvor beschriebenen bevorzugten Ausführungsformen und Merkmale der Erfindung sind beliebig miteinander kombinierbar.

### Kurzbeschreibung der Figuren

Weitere Einzelheiten und Vorteile der Erfindung werden im Folgenden unter Bezug auf die beigefügten Zeichnungen beschrieben. Es zeigen:
- Figur 1: eine rein schematische Draufsicht auf einen Abschnitt einer Behälterbehandlungsanlage gemäß einem Ausführungsbeispiel der vorliegenden Offenbarung;
- Figur 2: eine perspektivische Ansicht eines Transportsterns gemäß einem Ausführungsbeispiel der vorliegenden Offenbarung;
- Figur 3: eine Seitenansicht des beispielhaften Transportsterns von Figur 2;
- Figur 4: eine perspektivische Detaildarstellung einer Behälterhalterung des beispielhaften Transportsterns von Figur 2;
- Figur 5: eine Schnittansicht des beispielhaften Transportsterns von Figur 2;
- Figur 6: eine perspektivische Detaildarstellung eines Bereichs einer Betätigungseinrichtung des beispielhaften Transportsterns von Figur 2;
- Figur 7: eine perspektivische Detaildarstellung eines Bereichs einer modifizierten Betätigungseinrichtung eines Transportsterns gemäß einem Ausführungsbeispiel der vorliegenden Offenbarung;
- Figur 8: eine perspektivische Detaildarstellung einer modifizierten Behälterhalterung eines Transportsterns gemäß einem Ausführungsbeispiel der vorliegenden Offenbarung;
- Figur 9: eine Schnittansicht der beispielhaften, modifizierten Behälterhalterung von Figur 8;
- Figur 10: eine schematische Draufsicht auf eine anpassbare Steuerkurve einer modifizierten Betätigungseinrichtung eines Transportsterns gemäß einem Ausführungsbeispiel der vorliegenden Offenbarung; und
- Figur 11: eine schematische Schnittansicht einer modifizierten Behälterhalterung eines Transportsterns gemäß einem Ausführungsbeispiel der vorliegenden Offenbarung.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

### Detaillierte Beschreibung beispielhafter Ausführungsformen

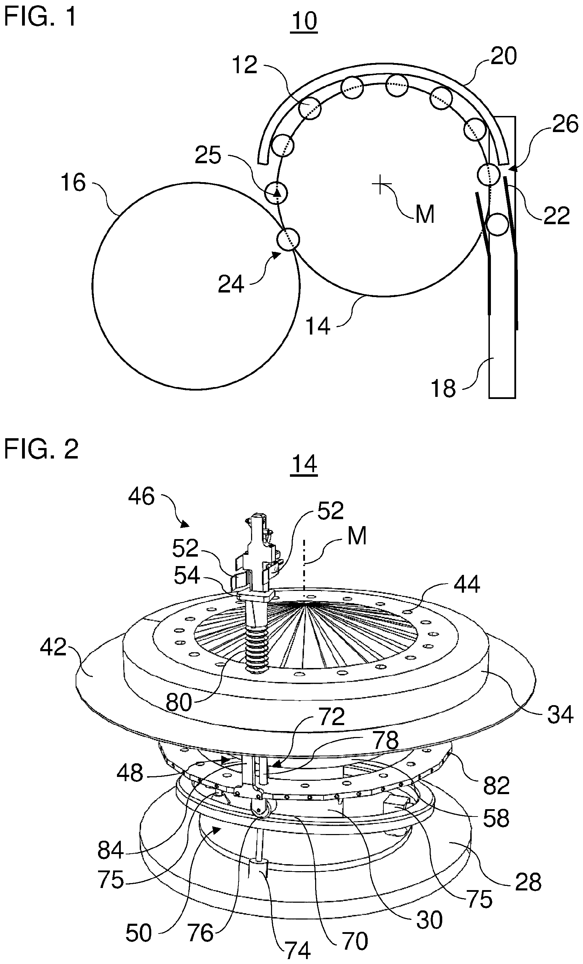

Die Figur 1 zeigt einen Abschnitt einer Behälterbehandlungsanlage 10 zum Behandeln von Behältern 12. Die Behälterbehandlungsanlage 10 weist einen Transportstern 14 auf. Die Behälterbehandlungsanlage 10 kann ferner eine Verschließvorrichtung 16 und einen Behälterförderer 18 aufweisen.

Der Transportstern 14 kann die Verschließvorrichtung 16 und den Behälterförderer 18 miteinander verbinden. Der Transportstern 14 kann die Behälter 12 entlang eines Bewegungspfads 25 transportieren. Der Transportstern 14 kann die Behälter 12 von der Verschließvorrichtung 16 in einem Behältereinlaufbereich 24 des Bewegungspfads 25 übernehmen und zu dem Behälterförderer 18 transportieren. Zum Transportieren können die Behälter 12 um eine Mittelachse M des Transportsterns 14 entlang des Bewegungspfads 25 gedreht werden. Der Transportstern 14 kann die Behälter 12 beim Transport entlang des Bewegungspfads 25 von einem Transporthöhenniveau der Verschließvorrichtung 16 auf ein Transporthöhenniveau des Behälterförderers 18 absenken. Im Behälterauslaufbereich 26 des Bewegungspfads 25 kann der Transportstern 14 die Behälter 12 an den Behälterförderer 18 abgeben.

Es ist möglich, dass die Behälter 12 während des Transports mittels des Transportsterns 14 von einem Führungsteil oder einer Führungsgarnitur 20 geführt werden. Die Führungsgarnitur 20 kann den Transportstern 14 in einem Abschnitt zwischen der Verschließvorrichtung 16 und dem Behälterförderer 18 umgeben. Beispielsweise kann die Führungsgarnitur 20 als ein Schlauchgarniturteil ausgeführt sein.

Es ist ebenfalls möglich, dass die Behälter 12 im Behälterauslaufbereich 26 bei einer Behälterübergabe von dem Transportstern 14 zu dem Behälterförderer 18 von einem Ablenkelement 22 auf den Behälterförderer 18 verschoben werden. Beispielsweise kann das Ablenkelement 22 als ein einseitiges oder zweiseitiges Führungsgeländer ausgeführt sein. Alternativ oder zusätzlich können die Behälter 12 im Behälterauslaufbereich 26 zu bzw. auf den Behälterförderer 18 geschoben werden.

Die Verschließvorrichtung 16 kann die Behälter 12 verschließen, z. B. mit einem Deckel, einem Korken, einem Kronkorken oder einem Schraubverschluss. Die Verschließvorrichtung 16 kann vorzugsweise als ein Verschließerkarussell ausgeführt sein. Die Verschließvorrichtung 16 kann mehrere Verschließstationen zum gleichzeitigen Verschließen mehrerer Behälter 12 aufweisen. Bspw. können die Verschließstationen um einen Umfang der als Verschließerkarussell ausgeführten Verschließvorrichtung 16 angeordnet sein. Die Verschließvorrichtung 16 kann bezüglich eines Behälterstroms stromabwärts von einer Füllvorrichtung zum Füllen der Behälter 12 angeordnet sein (nicht in Figur 1 dargestellt).

Der Behälterförderer 18 kann die Behälter 12 von dem Transportstern 14 abtransportieren. Bevorzugt ist der Behälterförderer 18 als ein Linearförderer ausgeführt. Beispielsweise kann der Behälterförderer 18 als ein Bandförderer oder Mattenförderer, vorzugsweise Mattenkettenförderer, ausgebildet sein.

Die Figuren 2 bis 7 zeigen unterschiedliche Ansichten des Transportsterns 14.

Der Transportstern 14 kann beispielsweise eine Basis 28, eine Tragsäule 30, eine Hauptantriebswelle 32 und eine Tragplatte 34 aufweisen.

Die Tragsäule 30 kann bevorzugt zentral auf der Basis 28 abgestützt sein. Die Tragsäule 30 kann ein bevorzugt zentrales Durchgangsloch 36 aufweisen. Das Durchgangsloch 36 verläuft bevorzugt kollinear zur Mittelachse M. Das Durchgangsloch 36 kann sich vertikal durch die Tragsäule 30 von einem unteren Ende der Tragsäule 30 zu einem oberen Ende der Tragsäule 30 erstrecken. Die Tragsäule 30 kann beispielsweise eine Rohrform mit einem kreisrunden oder mehreckigen Querschnitt aufweisen.

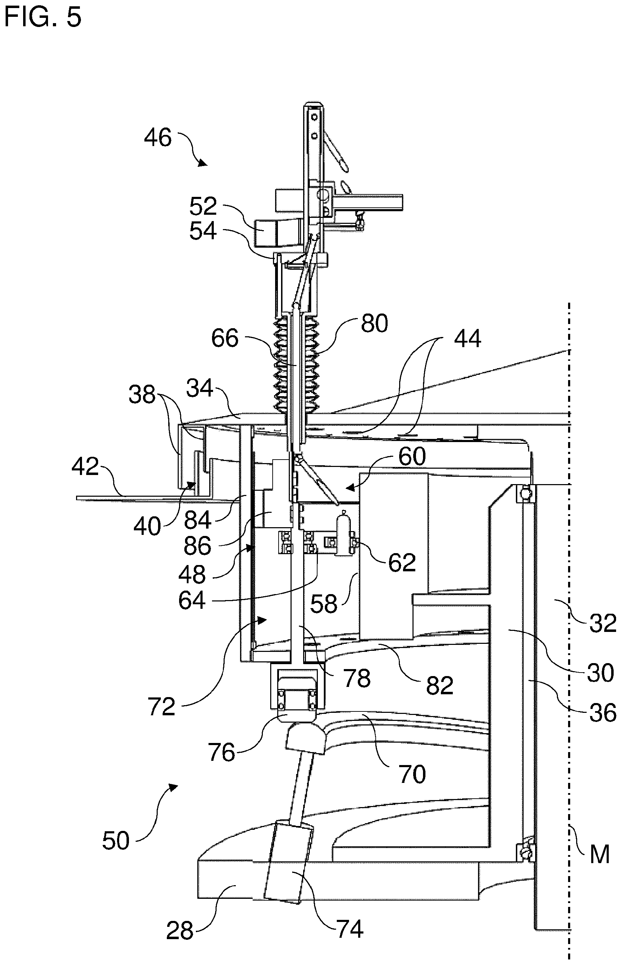

Die Hauptantriebswelle 32 kann drehbar in dem Durchgangsloch 36 gelagert sein, z. B. mittels Wälzlagern (siehe Figur 5). Die Hauptantriebswelle 32 kann von einer Hauptantriebseinheit (nicht dargestellt) angetrieben sein. Die Hauptantriebseinheit kann beispielsweise im Bereich der Basis 28 oder darunter angeordnet sein. Die Mittelachse M kann zugleich die Drehachse der Hauptantriebswelle 32 sein.

Die Tragplatte 34 kann von der Hauptantriebswelle 32 zum Drehen angetrieben werden. Es ist möglich, dass die Tragplatte 34 von der Hauptantriebswelle 32 getragen ist. Die Tragplatte 34 kann den Transportstern 14 in ein Oberteil (oberhalb der Tragplatte 34) und ein Unterteil (unterhalb der Tragplatte 34) unterteilen. Die Tragplatte 34 kann beispielsweise im Wesentlichen scheibenförmig ausgeführt sein bzw. eine (z. B. kreis-) runde Außenkontur aufweisen. Die Tragplatte 34 kann horizontal bzw. waagerecht ausgerichtet sein.

Bevorzugt kann die Tragplatte 34 an ihrer Unterseite mehrere ringförmige, einander umgebende Wandabschnitte bzw. Wasserschlossschwerter 38 für eine hydraulische Dichtung 40, vorzugsweise ein Wasserschloss, aufweisen. Die Wandabschnitte 38 können vorzugsweise im Wesentlichen koaxial zu der Mittelachse M angeordnet sein. Die Wandabschnitte 38 können sich beispielsweise von einer Unterseite der Tragplatte 34 kragenförmig nach unten erstrecken bzw. ragen. Die Wandabschnitte 38 sind bevorzugt an einem Außenumfang der Tragplatte 34 angeordnet. Die hydraulische Dichtung 40 kann zusammen mit einem weiteren Bauteil 42 erzielt werden. Das Bauteil 42 kann bspw. ein Bereich oder eine Komponente eines den Unterteil des Transportsterns 14 umgebenden, vorzugsweise kapselnden, Gehäuses sein (nicht in den Figuren dargestellt). Das Bauteil 42 kann einen Ringkörper aufweisen, der an einer Oberseite mehrere ringförmige, einander umgebende Wandabschnitte aufweist. Die Wandabschnitte des Bauteils 42 können mit den Wandabschnitten 38 der Tragplatte 34 zum Bilden der hydraulischen Dichtung 40 ineinandergreifen. Im Einzelnen kann mindestens ein Wandabschnitt des Bauteil 42 von unten zwischen die Wandabschnitte 38 der Tragplatte 34 greifen bzw. zwischen diesen eintauchen. Das Bauteil 42 ist bevorzugt feststehend.

Die Tragplatte 34 kann mehrere Durchgangslöcher 44 aufweisen. Die Durchgangslöcher 44 können eine Unterseite der Tragplatte 34 mit einer Oberseite der Tragplatte 34 verbinden. Die Durchgangslöcher 44 können sich parallel zu der Mittelachse M erstrecken. Die Durchgangslöcher 44 können in gleichen Abständen auf einem Kreisring angeordnet sein, der in einer Ebene liegt, die senkrecht zu der Mittelachse M ausgerichtet ist. Bevorzugt können die Durchgangslöcher 44 einen (z. B. kreis-) runden Querschnitt aufweisen.

Der Transportstern 14 weist mehrere Behälterhalterungen 46 zum Halten der Behälter 12 und eine Betätigungseinrichtung 48 zum Betätigen der Behälterhalterungen 46 auf. Der Transportstern 14 kann ferner eine Höhenverstelleinrichtung 50 aufweisen.

Der besseren Übersicht halber ist in den Figuren 2 bis 5 lediglich eine von insgesamt zwanzig Behälterhalterungen 46 dargestellt. Es versteht sich, dass der Transportstern 24 mehr oder weniger als zwanzig Behälterhalterungen 46 aufweisen kann. Zur besseren Darstellung der Behälterhalterung 46 ist in den Figuren 2 bis 5 zudem kein in der Behälterhalterung 46 gehaltener Behälter 12 (siehe Figur 1) dargestellt.

Die Behälterhalterungen 46 sind um einen Umfang des Transportsterns 14 angeordnet. Beispielsweise können die Behälterhalterung 46 an bzw. auf einer Oberseite des Transportsterns 14 angeordnet sein. Im Einzelnen können die Behälterhalterungen 46 oberhalb von der Tragplatte 34 angeordnet sein. Die Behälterhalterungen 46 können in gleichen Abständen um einen Umfang des Transportsterns 14 angeordnet sein. Bevorzugt kann jede der Behälterhalterung 46 genau einen Behälter 12 halten.

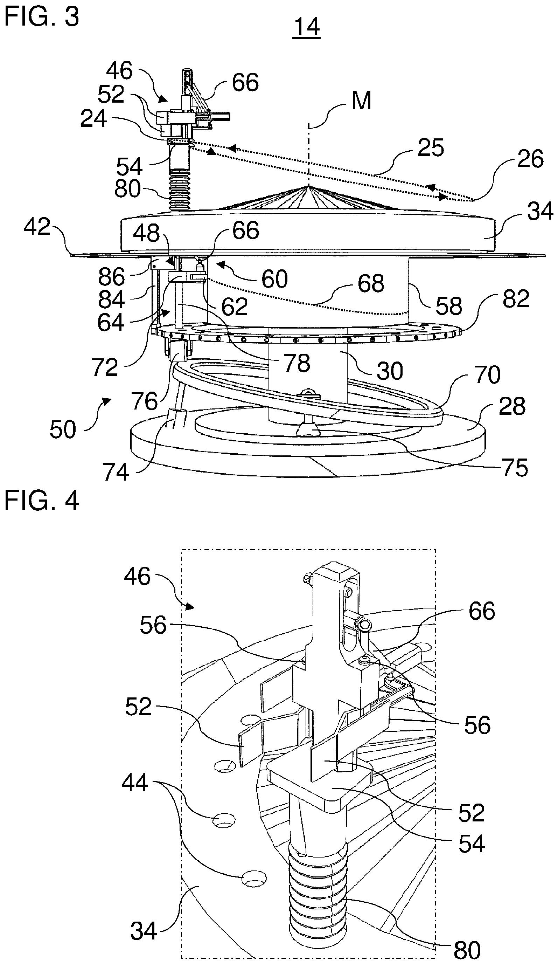

Die Behälterhalterungen 46 können auf unterschiedliche Art und Weise zum Halten der Behälter 12 ausgeführt sein. Beispielsweise können die Behälterhalterungen 46 jeweils einen oder mehrere Greiferarme bzw. Klappen 52 aufweisen. Die Greiferarme 52 können beispielsweise federöffnend oder federschließend sein. Mittels der Greiferarme 52 kann ein Behälter 12 gegriffen und/oder freigegeben werden. Beispielsweise kann der Behälter 12 mit den Greiferarmen 52 an einem Behälterrumpf bzw. Behältermantel des Behälters 12 gegriffen werden. Die Greiferarme 52 können verschwenkbar und/oder verschiebbar sein. Beispielsweise können die Greiferarme 52 jeweils um eine im Wesentlichen vertikale Schwenkachse 56 (siehe Figur 4) aufeinander zu geschwenkt werden, um einen Behälter 12 zu ergreifen, und voneinander weg geschwenkt werden, um einen Behälter 12 freizugeben. Alternativ können die Greiferarme 52 beispielsweise aufeinander zu verschoben werden, um einen Behälter 12 zu ergreifen, und voneinander weg verschoben werden, um einen Behälter 12 freizugeben.

Bevorzugt weisen die Behälterhalterungen 46 jeweils noch eine Stützplatte 54 auf. Die Stützplatte 54 kann den Behälter 12 bodenseitig abstützen. Der Behälter 12 kann bevorzugt aufrecht auf der Stützplatte 54 stehen. Die Greiferarme 52 können oberhalb von der Stützplatte 54 angeordnet sein. Die Stützplatte 54 kann beispielsweise rechteckförmig oder (z. B. kreis-) rund sein. Es ist möglich, dass die Stützplatte 54 als ein Drehteller ausgeführt ist.

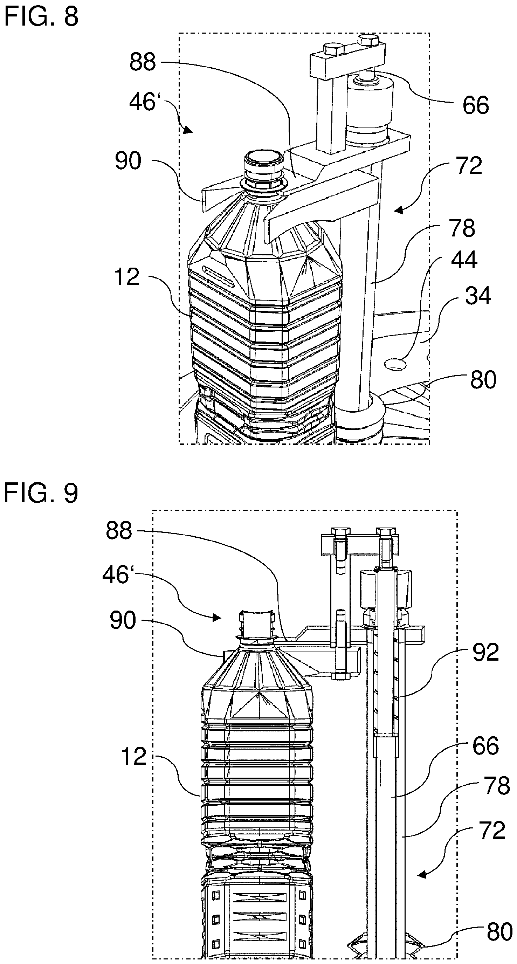

Es ist ebenfalls möglich, dass die Behälterhalterungen 46 die Behälter 12 zusätzlich oder alternativ an einem Behälterhals bzw. Behälterhalsrings (soweit vorhanden) halten können, wie hierin beispielsweise noch unter Bezugnahme auf die Figuren 8 und 9 näher beschrieben ist.

Im Betrieb können sich die Behälterhalterungen 46 um die Mittelachse bzw. Drehachse M entlang des Bewegungspfads 25 drehen und dabei Behälter 12 von der Verschließvorrichtung 16 zu dem Behälterförderer 18 transportieren. Die Behälterhalterungen 46 können die Behälter 12 entlang des Bewegungspfads 25 im Behältereinlaufbereich 24 übernehmen, zum Behälterauslaufbereich 26 transportieren und im Behälterauslaufbereich 26 abgeben (siehe Figuren 1 und 3).

Auf dem Weg von dem Behältereinlaufbereich 24 zu dem Behälterauslaufbereich 26 werden die Behälter 12 von den sich entlang des Bewegungspfads 25 bewegenden Behälterhalterungen 46 abgesenkt. In anderen Worten, der Behältereinlaufbereich 24 ist auf einem höheren Niveau angeordnet als der Behälterauslaufbereich 26.

Im Einzelnen umläuft der Bewegungspfad 25 der Behälterhalterungen 46 bzw. der Behälter 12 die Mittelachse M. Der Bewegungspfad 25 weist den Behältereinlaufbereich 24 und den Behälterauslaufbereich 26 auf. Der Bewegungspfad 25 kann mindestens eine rampenförmige Absenkung auf einem Weg von dem Behältereinlaufbereich 24 zu dem Behälterauslaufbereich 26 aufweisen. Der Bewegungspfad 25 kann mindestens einen rampenförmigen Anstieg von dem Behälterauslaufbereich 26 zu dem Behältereinlaufbereich 24 aufweisen. Beispielsweise kann der Bewegungspfad 25 eine (z. B. Kreis-) Ringform aufweisen. Die Ringform kann in einer Ebene liegen, die geneigt zu der Mittelachse M ist. Der Bewegungspfad 25, der Behältereinlaufbereich 24 und der Behälterauslaufbereich 26 können oberhalb von der Tragplatte 34 positioniert sein.

Bevorzugt kann der Bewegungspfad 25 verstellbar bzw. anpassbar sein. Besonders bevorzugt kann der Behältereinlaufbereich 24 mittels der Höhenverstelleinrichtung 50 höhenverstellbar sein. Es ist möglich, dass auch der Behälterauslaufbereich 26 mittels der Höhenverstelleinrichtung 50 höhenverstellbar ist, z. B. in Ausführungsformen, in denen die Behälter 12 im sogenannten Neckhandling transportiert werden.

Die Behälterhalterungen 46 sind von der Betätigungseinrichtung 48 aktiv zum Öffnen und/oder Schließen betätigbar. Die Betätigungseinrichtung 48 weist eine Steuerkurve bzw. Betätigungskurve 58 und mehrere Verbindungseinrichtungen 60, von denen wiederum nur eine in den Figuren 3, 4 und 5 dargestellt ist, auf.

Die Steuerkurve 58 ist als eine geschlossene Zylindermantelfläche, vorzugsweise Zylinderaußenmantelfläche wie dargestellt (oder Zylinderinnenmantelfläche), gebildet. In einem gedachten abgerollten Zustand kann die Steuerkurve 58 ein Rechteck bilden. Ein Querschnitt der Zylindermantelfläche bzw. der Steuerkurve 58 kann von einem kreisrunden Querschnitt abweichen, um eine Betätigung der Behälterhalterungen 46 zu ermöglichen. Ein Querschnitt der Steuerkurve 58 kann entlang der Mittelachse M konstant sein.

Die Steuerkurve 58 kann ein Betätigen der Behälterhalterungen 46 unabhängig von einer, vorzugsweise mittels der Höhenverstelleinrichtung 50 verstellbaren, Höheneinstellung des Bewegungspfads 25 steuern.

Die Steuerkurve 58 kann an der Tragsäule 30 des Transportsterns 14 getragen sein. Beispielsweise kann die Steuerkurve 58 eine Zylindermantelfläche eines Ringkörpers bilden, der an der Tragsäule 30 befestigt ist, zum Beispiel an einem Außenumfang der Tragsäule 30. Es ist jedoch auch möglich, dass die Steuerkurve 58 direkt von der Basis 28 getragen ist oder integral-einstückig mit der Tragsäule 30 ausgebildet ist.

Die Steuerkurve 58 kann koaxial zu der Mittelachse M angeordnet sein. Die Steuerkurve 58 kann die Tragsäule 30 umgeben. Die Steuerkurve 58 kann unterhalb der Tragplatte 34 angeordnet sein. Die Steuerkurve 58 kann bezüglich der Mittelachse M radial innen liegend von den Verbindungseinrichtungen 60 angeordnet sein.

Die Verbindungseinrichtungen 60 stellen jeweils eine Wirkverbindung zwischen der Steuerkurve 58 und einer der mehreren Behälterhalterungen 46 zum Betätigen der jeweiligen Behälterhalterung 46 her. Im Einzelnen kann jede Behälterhalterung 46 mittels jeweils einer der Verbindungseinrichtungen 60 mit der Steuerkurve 58 mechanisch gekoppelt sein.

Die Verbindungseinrichtungen 60 können dazu ausgebildet sein, eine Kontur der Steuerkurve 58 zu einer Betätigungsbewegung der Behälterhalterungen 46, z. B. der Greiferarme 52, zu wandeln. Bevorzugt können die Verbindungseinrichtungen 60 dazu ausgebildet sein, eine Kontur der Steuerkurve 58 in eine Radialbewegung bezüglich der Mittelachse M zu wandeln, die Radialbewegung in eine Vertikalbewegung parallel zu der Mittelachse M zu wandeln und die Vertikalbewegung in eine Betätigungsbewegung der Behälterhalterungen 46, zum Beispiel eine Schwenkbewegung der Greiferarme 52 zu wandeln.

Beispielsweise können die Verbindungseinrichtungen 60 jeweils ein Führungselement 62, mindestens einen Schwenkarm 64 und/oder ein Koppelgestänge 66 aufweisen.

Das Führungselement 62 ist umlaufend um die Mittelachse M des Transportsterns 14 an der Steuerkurve 58 entlang eines Bewegungspfads 68 (siehe Figur 3) geführt. Bevorzugt rollt oder gleitet das Führungselement 62 an der Steuerkurve 58. Beispielsweise kann das Führungselement 62 als eine drehbare Rolle oder als ein Gleitschuh ausgeführt sein. Die Führungselemente 62 können unterhalb der Tragplatte 34 angeordnet sein. Es ist möglich, dass die Führungselemente 62 federnd gelagert sind, zum Beispiel an dem mindestens einen Schwenkarm 64 und/oder dem Koppelgestänge 66.

Ein Höhenverlauf des Bewegungspfads 25 der Behälterhalterungen 46 kann im Wesentlichen einem Höhenverlauf des Bewegungspfads 68 der Führungselemente 62 entsprechen. Insofern kann eine Verstellung des Höhenverlaufs des Bewegungspfads 25 der Behälterhalterungen 46 eine entsprechende Verstellung des Höhenverlaufs des Bewegungspfads 68 der Führungselemente 62 bewirken.

Das Führungselement 62 kann einer Kontur der Steuerkurve 58 folgen. Das Führungselement 62 kann bezüglich der Mittelachse M radial bewegbar gelagert sein. Eine Veränderung einer Kontur der Steuerkurve 58 kann eine Radialbewegung des Führungselements 62 bewirken. Verändert sich bspw. in einem Abschnitt der Steuerkurve 58 ein Abstand zwischen der Steuerkurve 58 und der Mittelachse M, so können die diesen Abschnitt passierenden Führungselemente 62 eine Radialbewegung vollführen. Vergrößert sich der Abstand, kann die Radialbewegung bezüglich der Mittelachse M nach außen gerichtet sein. Verkleinert sich der Abstand, kann die Radialbewegung bezüglich der Mittelachse M nach innen gerichtet sein.

Der mindestens eine Schwenkarm 64 kann das Führungselement 62 schwenkbar um eine Schwenkachse lagern. Die Schwenkachse kann beispielsweise vertikal ausgerichtet sein bzw. parallel zu der Mittelachse M ausgerichtet sein. Die Schwenkbarkeit des Führungselements 62 kann dessen radiale Bewegbarkeit ermöglichen. Die Schwenkarme 64 können unterhalb der Tragplatte 34 angeordnet sein.

Das Koppelgestänge 66 kann das Führungselement 62 bzw. den mindestens einen Schwenkarm 64 und die Behälterhalterungen 46 miteinander verbinden. Bevorzugt kann das Koppelgestänge 66 eine Radialbewegung des Führungselements 62 und/oder des mindestens einen Schwenkarms 64 bezüglich der Mittelachse M zu einer Vertikalbewegung wandeln. Die Vertikalbewegung kann dann von dem Koppelgestänge 66 beispielsweise noch in eine Betätigungsbewegung der Behälterhalterung 46, zum Beispiel eine Schwenkbewegung der Greiferarme 52, gewandelt werden. Zum Wandeln der unterschiedlichen Bewegungsrichtungen kann das Koppelgestänge 66 eines oder mehrere Gelenke, zum Beispiel Kugelgelenke und/oder Drehgelenke, aufweisen. Es ist auch möglich, dass die die Vertikalbewegung des Koppelgestänge 66 direkt zu einer entsprechenden vertikalen Betätigungsbewegung der Behälterhalterungen 46 führt (vgl. die später hierin im Detail beschriebene modifizierte Ausführungsform von Figur 8 und 9).

Es ist möglich, dass ein oberer Abschnitt des Koppelgestänges 66, der direkt mit der Behälterhalterung 46 zum Betätigen der Behälterhalterung 46 verbunden ist, durch eine Membran, ein (z. B. Torsions-) Balg oder ein Gehäuse zu einer Umgebung hin abgedichtet ist (nicht dargestellt).

Die Verbindungseinrichtungen 60 können jeweils einen Abschnitt, der oberhalb der Tragplatte 34 angeordnet ist, und einen Abschnitt, der unterhalb der Tragplatte 34 angeordnet ist, aufweisen. Die Verbindungseinrichtungen 60 können sich durch die Durchgangslöcher 44 hindurch erstrecken. Bevorzugt erstreckt sich jeweils eine der Verbindungseinrichtungen 60 durch eines der Durchgangslöcher 44. Vorzugsweise erstrecken sich die Koppelgestänge 66 der Verbindungseinrichtungen 60 durch die Durchgangslöcher 44.

Die Höhenverstelleinrichtung 50 kann zum Verstellen einer Höhenposition des Behältereinlaufbereichs ausgebildet sein. Mittels Verstellen der Höhenposition des Behältereinlaufbereichs 24 kann die Höhenverstelleinrichtung 50 den Verlauf des Bewegungspfads 25 der Behälterhalterungen 46 bzw. der Behälter 12 verstellen bzw. anpassen.

Vorzugsweise kann die Höhenverstelleinrichtung 50 eine Steuerkurve bzw. Absenkkurve 70, mehrere Stützeinrichtungen 72, von denen wiederum nur eine in den Figuren 2, 3, 5 und 6 dargestellt ist, und/oder mindestens einen Aktor 74, 75 aufweisen.

Die Steuerkurve 70 kann beispielsweise als Führungsschiene ausgeführt sein. Die Steuerkurve 70 ist vorzugsweise als eine Oberseite eines (z. B. Kreis-) Rings gebildet. Die Steuerkurve 70 kann in einer Ebene liegen, die geneigt zu der Mittelachse M ist. Ein Höhenverlauf der Steuerkurve 70 kann im Wesentlichen einen Höhenverlauf des Bewegungspfads 25 vorgegeben. Insofern kann eine Verstellung der Steuerkurve 70, zum Beispiel durch eine Änderung der Neigung und/oder der Höhe der Steuerkurve 70, eine entsprechende Verstellung des Höhenverlaufs des Bewegungspfads 25 bewirken.

Die Steuerkurve 70 kann an dem mindestens einen Aktor 74, 75 abgestützt und/oder schwenkbar gelagert sein. Die Steuerkurve 70 kann die Tragsäule 30 umgeben. Die Steuerkurve 70 kann unterhalb der Tragplatte 34 angeordnet sein. Die Steuerkurve 70 kann unterhalb der Steuerkurve 58 angeordnet sein. Die Steuerkurve 70 kann oberhalb von der Basis 28 angeordnet sein.

Die Stützeinrichtungen 72 können die Behälterhalterungen 46 von unten auf der Steuerkurve 70 abstützen. Vorzugsweise können die Stützeinrichtungen 72 eine Wirkverbindung zwischen einem Höhenverlauf der Steuerkurve 70 und dem Bewegungspfad 25 herstellen. Im Einzelnen kann jede Behälterhalterung 46 mittels jeweils einer der Stützeinrichtungen 72 mit der Steuerkurve 70 mechanisch gekoppelt sein.

Eine Vertikalbewegung eine Stützeinrichtungen 72 nach unten oder nach oben kann eine entsprechende Vertikalbewegung der jeweiligen Behälterhalterung 46 nach unten oder nach oben bewirken.

Beispielsweise können die Stützeinrichtungen 72 jeweils ein Führungselement 76 und/oder einen Hubkörper bzw. eine Hubstange 78 aufweisen.

Das Führungselement 76 ist umlaufend um die Mittelachse M auf der Steuerkurve 58 geführt. Bevorzugt rollt oder gleitet das Führungselement 76 auf der Steuerkurve 70. Beispielsweise kann das Führungselement 76 als eine drehbare Rolle oder als ein Gleitschuh ausgeführt sein. Die Führungselemente 76 können unterhalb der Tragplatte 34 angeordnet sein.

Das Führungselement 76 kann einem Höhenverlauf der Steuerkurve 70 folgen. Das Führungselement 76 kann vertikal bewegbar sein bzw. parallel zu der Mittelachse M bewegbar sein. Ein Ansteigen der Steuerkurve 70 kann eine Vertikalbewegung des Führungselements 76 nach oben bewirken. Ein Abfallen der Steuerkurve 70 kann eine Vertikalbewegung des Führungselements 76 nach unten bewirken.

Die Hubstange 78 kann das Führungselement 76 mit der jeweiligen Behälterhalterung 46 mechanisch koppeln. Die Hubstange 78 kann eine Vertikalbewegung des Führungselements 76 auf die jeweilige Behälterhalterung 46 zum Anheben oder Absenken der jeweiligen Behälterhalterung 46 übertragen.

Es ist möglich, dass die Hubstange 78 als eine Schwenkachse für den mindestens einen Schwenkarm 64 dient. Der mindestens eine Schwenkarm 64 kann um einen vertikalen Abschnitt der Hubstange 78 drehbar bzw. schwenkbar gelagert sein.

Die Stützeinrichtungen 72 können jeweils einen Abschnitt, der oberhalb der Tragplatte 34 angeordnet ist, und einen Abschnitt, der unterhalb der Tragplatte 34 angeordnet ist, aufweisen. Die Stützeinrichtungen 72 können sich durch die Durchgangslöcher 44 hindurch erstrecken. Bevorzugt erstreckt sich jeweils eine der Stützeinrichtungen 72 durch eines der Durchgangslöcher 44. Vorzugsweise erstrecken sich die Hubstangen 78 der Stützeinrichtungen 72 durch die Durchgangslöcher 44.

Jeder Behälterhalterung 46 kann eine der Stützeinrichtungen 72 und eine der Verbindungseinrichtungen 60 zugeordnet sein. Die Stützeneinrichtung 72 und die Verbindungseinrichtung 60, die derselben Behälterhalterung 46 zugeordnet sind, können sich vorzugsweise durch dasselbe Durchgangsloch 44 hindurch erstrecken. Vorzugsweise weist die jeweilige Stützeinrichtung einen bevorzugt rohrförmigen Abschnitt auf, der koaxial zu einem Abschnitt der Verbindungseinrichtung 60 angeordnet ist. Besonders bevorzugt ist der rohrförmige Abschnitt derjenige Abschnitt der jeweiligen Stützeinrichtung 72, der sich durch das jeweilige Durchgangsloch 44 hindurch erstreckt. Vorzugsweise kann der rohrförmige Abschnitt in der Hubstange 78 integriert sein.

Bevorzugt sind die Durchgangslöcher 44 der Tragplatte 34 abgedichtet. Beispielsweise kann je Durchgangsloch 44 eine Dichtung 80 vorgesehen sein, die eine Oberseite der Tragplatte 34 im Wesentlichen fluiddicht mit einem Außenmantel der sich durch das Durchgangsloch 44 erstreckenden Stützeinrichtung 72 verbindet. Besonders bevorzugt können die Dichtungen 80 als Membranen oder Faltenbälgen ausgeführt sein.

Der mindestens eine Aktor 74, 75 kann mit der Steuerkurve 70 zum Anpassen einer Neigung und/oder einer Höhe der Steuerkurve 70 verbunden sein. Vorzugsweise kann durch Anpassen der Neigung und/oder der Höhe der Steuerkurve 70 ein Höhenverlauf des Bewegungspfads 25 angepasst werden, wodurch sich bspw. eine Höhenposition des Behältereinlaufbereichs 24 und/oder eine Höhenposition des Behälterauslaufbereichs 26 anpassen lässt. Vorzugsweise kann die Höhenposition des Behältereinlaufbereichs 24 derart eingestellt werden, dass diese einem Höhenniveau der Unterkante des zu übernehmenden Behälters 12 entspricht (z. B. beim Basehandling) oder einem Höhenniveau der Unterkante eines Halsrings des zu übernehmenden Behälters 12 entspricht (z. B. beim Neckhandling). Vorzugsweise kann die Höhenposition des Behälterauslaufbereichs 26 derart eingestellt werden, dass ein Höhenniveau der Unterkante des zu übergebenden Behälters 12 einem Höhenniveau des empfangenden Behälterförderers 18 entspricht.

Der mindestens eine Aktor 74, 75 kann vorzugsweise unterhalb von der Steuerkurve 70 angeordnet sein. Der mindestens eine Aktor 74, 75 kann sich beispielsweise an der Basis 28 abstützen bzw. an der Basis 28 gelagert sein.

Der mindestens eine Aktor 74, 75 kann auf jegliche Art und Weise ausgeführt sein. Beispielsweise kann der mindestens eine Aktor 74, 75 elektromagnetisch, elektromotorisch, pneumatisch oder hydraulisch ausgeführt sein. Der mindestens eine Aktor 74, 75 kann mehrere Aktoren 74, 75 umfassen, die die Steuerkurve 70 an unterschiedlichen Umfangspositionen abstützen und/oder schwenkbar lagern können. Der mindestens eine Aktor 74, 75 kann ein- und ausfahrbar sein.

Ein (z. B. erster) Aktor 74 kann ein Anpassen einer Neigung der Steuerkurve 70 bewirken. Ein Ausfahren des Aktors 74 kann eine Vergrößerung der Neigung der Steuerkurve 70, zum Beispiel bezüglich einer Horizontalebene, bewirken. Andererseits kann ein Einfahren des Aktors 74 eine Verringerung der Neigung der Steuerkurve 70, zum Beispiel bezüglich einer Horizontalebene, bewirken. Der Aktor 74 kann bevorzugt unterhalb von dem Behältereinlaufbereich 24 angeordnet sein. Es ist möglich, dass eine Längsachse bzw. Betätigungsachse des Aktors 74 geneigt zu einer Vertikalachse bzw. geneigt zur Mittelachse M verläuft.

Mindestens ein (z. B. zweiter) Aktor 75 kann ein (z. B. lineares) Anpassen einer Höhe der Steuerkurve 70 bewirken. Beispielsweise kann ein Ausfahren des mindestens einen Aktors 75 eine lineare Vertikalbewegung der Steuerkurve 70 nach oben bewirken. Ein Einfahren kann hingegen ein lineare Vertikalbewegung der Steuerkurve 70 nach unten bewirken. Die Steuerkurve 70 kann an einer Verbindung zu dem mindestens einen Aktor 75 schwenkbar gelagert sein, um eine Veränderung der Neigung durch den Aktor 74 zu ermöglichen. Der mindestens eine Aktor 75 kann bevorzugt unterhalb einer Stelle des Bewegungspfads 25 der Behälterhalterungen 46 auf ungefähr halbem Weg zwischen dem Behältereinlaufbereich 24 und dem Behälterauslaufbereich 26 angeordnet sein. Es ist möglich, dass eine Längsachse bzw. Betätigungsachse des mindestens einen Aktors 75 vertikal verläuft bzw. parallel zu der Mittelachse M verläuft.

Es ist möglich, dass der Transportstern 14 ferner beispielsweise eine ringförmige Zwischenplatte 82 und mehrere Verbindungsträger 84, von denen nur einer in den Figuren 2, 3, 5, 6 und 7 dargestellt ist, aufweist.

Die Zwischenplatte 82 kann horizontal ausgerichtet sein. Die Zwischenplatte 82 kann bevorzugt unterhalb von der Steuerkurve 58 und oberhalb von der Steuerkurve 70 angeordnet sein. Die Zwischenplatte 82 kann mehrere Durchgangslöcher aufweisen, durch die sich die Hubstangen 78 erstrecken können. Die Hubstangen 78 können vertikal verschiebbar in den Durchgangslöchern der Zwischenplatte 82 geführt sein. Die Durchgangslöcher der Zwischenplatte 82 können mit den Durchgangslöchern 44 der Tragplatte 34 ausgerichtet sein bzw. fluchten. Die Zwischenplatte kann an der Tragplatte 34 getragen sein. Im Betrieb kann sich die Zwischenplatte 82 um die Mittelachse M drehen. Die Zwischenplatte 82 kann damit eine Drehbewegung der Stützeinrichtungen 72 um die Mittelachse M führen bzw. abstützen. Damit kann ebenfalls eine Drehbewegung der mit den Stützeinrichtungen 72 verbundenen Verbindungseinrichtungen 60 um die Mittelachse M geführt bzw. abgestützt sein. Zudem kann mittels der Zwischenplatte 82 eine Radialbewegung der Stützeinrichtungen 72 bezüglich der Mittelachse M verhindert werden.

Die Verbindungsträger 84 können vertikal ausgerichtet sein bzw. parallel zu der Mittelachse M ausgerichtet sein. Die Verbindungsträger 84 können die Zwischenplatte 82 von unten an der Tragplatte 34 befestigen. Die mehreren Verbindungsträger 84 können um einen Umfang der Zwischenplatte 82 herum in beispielsweise gleichmäßigen Abständen angeordnet sein. Beispielsweise kann je Stützeinrichtungen 72 (bzw. je Verbindungseinrichtung 60 oder Behälterhalterung 46) je ein Verbindungsträger 84 vorgesehen sein. Die mehreren Verbindungsträger 84 können als Drehmomentstütze für die Stützeinrichtungen 72 (und damit ebenfalls für die Verbindungseinrichtungen 60) dienen. Beispielsweise kann die Hubstange 78 an einer Halterung 86 befestigt sein. Die Halterung 86 kann vertikal bewegbar an dem Verbindungsträger 84 gelagert sein, z. B. gleitend. Die Halterung 86 kann verdrehsicher an dem Verbindungsträger 84 gelagert sein. Der Verbindungsträger 84 kann damit als eine Verdrehsicherung für die Hubstange 78 dienen. Es ist auch möglich, dass mittels des Verbindungsträgers 84 und der Halterung 86 eine Radialbewegung der Stützeinrichtungen 72 bezüglich der Mittelachse M verhindert werden kann.

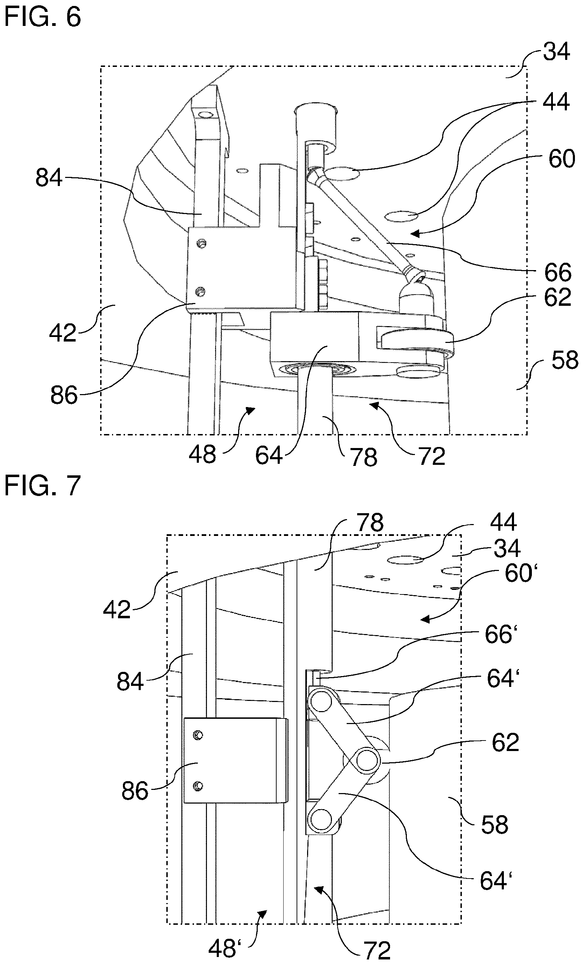

Der unter Bezugnahme auf die Figuren 2 bis 6 erläuterte Transportstern 14 kann auf unterschiedliche Art und Weise modifiziert werden, wie beispielhaft nachfolgend unter Bezugnahme auf die Figuren 7 bis 11 erläutert ist. Die nachfolgenden Ausführungsformen können jedoch auch unabhängig von den bezüglich der Figuren 1 bis 6 erläuterten Merkmalen verwirklicht werden.

Die Figur 7 zeigt eine modifizierte Verbindungseinrichtung 60'.

Die Verbindungseinrichtung 60' weist zwei Schwenkarme 64' auf. Die zwei Schwenkarme 64' können übereinander angeordnet sein. Die Schwenkarme 64' können horizontal verschwenkbar sein. Der obere Schwenkarm 64' kann schwenkbar mit dem Koppelgestänge 66' verbunden sein. Der untere Schwenkarm 64' kann schwenkbar mit der Stützeinrichtung 72 bzw. dessen Hubstange 78 verbunden sein. Das Führungselement 62 kann mit beiden Schwenkarmen 64' verbunden sein. Eine Radialbewegung des Führungselements 62 bezüglich der Mittelachse M kann eine Schwenkbewegung der Schwenkarme 64' bewirken. Die Schwenkbewegung der Schwenkarme 64' kann eine Vertikalbewegung des Koppelgestänges 66' bewirken.

Die Figuren 8 und 9 zeigen eine modifizierte Behälterhalterung 46'.

Die Behälterhalterung 46' kann zum Halten der Behälter 12 an einem Behälterhals bzw. einem Behälterhalsring ausgebildet sein. Beispielsweise kann die Behälterhalterung 46' eine Stützplatte 88 und ein Spannelement 90 aufweisen.

Mittels der Stützplatte 88 kann der Behälter 12 an dessen Behälterhalsring von unten abgestützt sein. Beispielsweise kann die Stützplatte 88 eine im Wesentlichen halbkreisförmige Ausnehmung aufweisen, in der ein Behälterhals des Behälters 12 unterhalb des Behälterhalsrings positioniert werden kann. Die Stützplatte 88 kann von der Hubstange 78 getragen sein.

Das Spannelement 90 kann beispielsweise gabelförmig sein. Das Spannelement 90 kann aktiv betätigbar sein. Eine Vertikalbewegung des Koppelgestänges 66 der Betätigungseinrichtung 48 nach unten kann das Spannelement 90 linear nach unten bewegen. Das Spannelement 90 kann von oben auf einen Behälterkörper des Behälters 12 drücken und damit gleichzeitig den Behälterhalsring des Behälters 12 gegen die Stützplatte 88 drücken. Damit kann ein an der Stützplatte 88 gehaltener Behälter 12 zwischen der Stützplatte 88 und dem Spannelement 90 eingespannt werden, zum Beispiel im Behältereinlaufbereich 24. Andererseits kann eine Vertikalbewegung des Koppelgestänges 66 der Betätigungseinrichtung 48 nach oben das Spannelement 90 linear nach oben bewegen. Damit kann eine Einspannung des Behälters 12 zwischen der Stützplatte 88 und dem Spannelement 90 zum Freigeben des Behälters 12 gelöst werden, zum Beispiel im Behälterauslaufbereich 26.

Vorzugsweise kann das Spannelement 90 zum Einspannen des Behälters 12 (bzw. zum Bewegen vertikal nach unten) oder zum Freigeben des Behälters 12 (bzw. zum Bewegen vertikal nach oben) elastisch vorgespannt sein. Beispielsweise kann ein elastisches Element 92 das Spannelement 90 elastisch vorspannen. Das elastische Element 92 kann beispielsweise koaxial zum Koppelgestänge 66 angeordnet sein. Das elastische Element 92 kann bevorzugt als eine Schraubenfeder, zum Beispiel eine Schraubendruckfeder oder eine Schraubenzugfeder, ausgeführt sein.

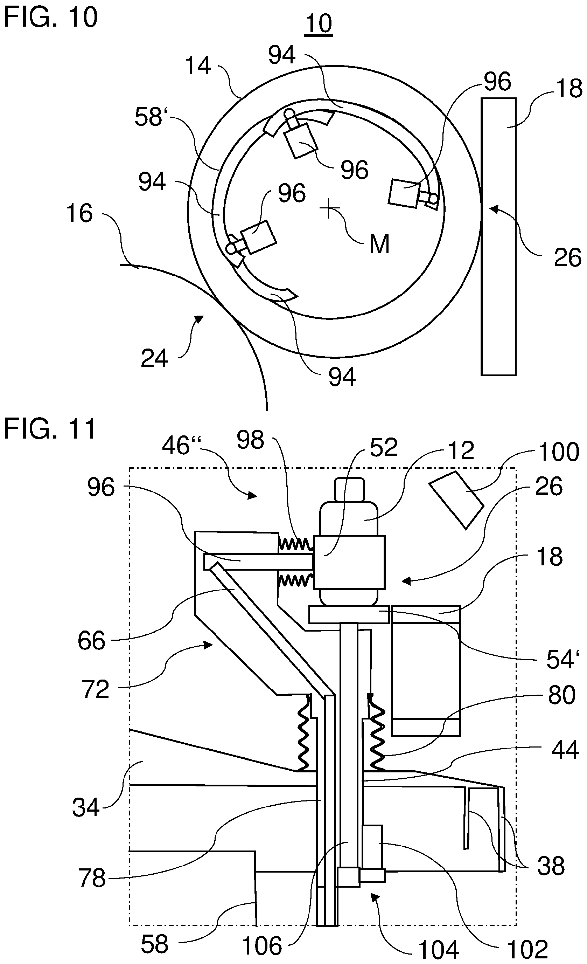

Die Figur 10 zeigt eine modifizierte Steuerkurve 58'.

Im Gegensatz zu der unveränderlichen Steuerkurve 58 des Ausführungsbeispiels, das unter Bezug auf die Figuren 2 bis 6 beschrieben wurde, ist die Steuerkurve 58' veränderlich bzw. anpassbar. Mittels der Verstellung der Steuerkurve 58' kann eine Betätigung der Behälterhalterungen 46 verändert werden.

Eine Kontur bzw. ein Außenquerschnitt der Steuerkurve 58' kann anpassbar sein. Bspw. kann die Steuerkurve 58' zumindest abschnittsweise durch mindestens ein bspw. zylindermantelsegmentförmiges Steuerkurvensegment 94 gebildet sein. Im Falle mehrerer Steuerkurvensegment 94 können jeweils zwei benachbarte Steuerkurvensegmente 94 vorzugsweise bewegbar, z. B. verschwenkbar um eine Vertikalschwenkachse, miteinander verbunden sein. Bevorzugt ist das mindestens eine Steuerkurvensegment 94 mittels mindestens einen Aktors 96 verstellbar bzw. bewegbar. Der mindestens eine Aktor 96 kann beispielsweise elektromagnetisch, elektromotorisch, pneumatisch oder hydraulisch ausgeführt sein. Alternativ kann das mindestens eine Steuerkurvensegment 94 beispielsweise manuell verstellt werden. Die Verstellung kann ermöglichen, dass ein radialer Abstand zwischen dem Steuerkurvensegment 94 und der Mittelachse M veränderbar ist.

Die Figur 11 zeigt eine modifizierte Behälterhalterung 46".

Die Behälterhalterung 46" kann ein Schubelement 97 aufweisen. Mittels des Schubelements 97 kann ein in der Behälterhalterung 46" positionierter Behälter 12 aus der Behälterhalterung 46" ausgeschoben werden. Bevorzugt kann der Behälter 12 im Behälterauslaufbereich 26 von dem Schubelement 97 ausgeschoben werden. Das Schubelement 97 kann den Behälter 12 zum Ausschieben bspw. direkt berühren. Alternativ kann das Schubelement 97 bspw. die Greiferarme 52 zum Ausschieben des Behälters 12 ausschieben.

Das Schubelement 97 kann als eine Schubstange ausgeführt sein. Das Schubelement 97 kann bevorzugt radial bezüglich der Mittelachse M ein- und ausgefahren werden. Das Schubelement 97 kann bspw. von der Betätigungseinrichtung 48 zum Ein- und/oder Ausfahren betätigt werden. Bevorzugt kann das Schubelemente 97 an einem Ende des Koppelgestänges 66 der Betätigungseinrichtung 48 angeordnet sein. Es ist möglich, dass das Schubelement 97 zum Ein- oder Ausfahren elastisch vorgespannt ist, z. B. mittels einer elastischen Feder.

Bevorzugt kann das Schubelement 97 wie folgt betrieben werden. Eine Bewegung des Koppelgestänges 66 kann von der Steuerkurve 58 gesteuert sein. Beim Hub des Koppelgestänges 66 nach unten, kann das Schubelement 97 bezüglich der Mittelachse M radial nach außen verschoben werden. Der Behälter 12 kann durch das Schubelement 97 über einen (z. B. nominellen) Teilkreis des Transportsterns 14 hinaus nach außen geschoben werden. Zeitversetzt und bevorzugt ebenfalls betätigt von der Betätigungseinrichtung 48 bzw. dem Koppelgestänge 66 können die Greiferarme bzw. die Klammer 52 öffnen, z. B. durch einen fortgesetzten Hub des Koppelgestänges 66 nach unten. Der Behälter 12 kann aktiv von der Behälterhalterung 46" auf den Behälterförderer 18 geschoben und dort losgelassen werden. Die Behälterhalterung 46" kann in diesem Zustand zu dem Behältereinlaufbereich 24 bewegt werden. Dort können durch einen Hub des Koppelgestänges 66 nach oben zunächst die Greiferarme 52 zum Greifen eines Behälters 12 geschlossen werden. Anschließend kann durch einen fortgesetzten Hub des Koppelgestänges 66 der Behälter 12 radial nach innen auf einen Teilkreis des Transportsterns 14 gezogen werden.

Es ist möglich, dass das Schubelement 97 bezüglich einer Umgebung abgedichtet ist. Bevorzugt kann zumindest ein Abschnitt des Schubelements 97 von einer Dichtung 98 umgeben sein. Die Dichtung 98 kann beispielsweise als eine Membran oder ein Faltenbalg ausgeführt sein.

Die Figur 11 zeigt ebenfalls eine Modifikation der Stützplatte 54'. Die Stützplatte 54' kann um eine Vertikalachse drehbar bzw. als ein Drehteller ausgeführt sein, um die Behälter 12 zu orientieren.

Beispielsweise kann mittels einer Sensorik 100 eine Orientierung der Behälter 12 zum Beispiel beim Passieren des Behältereinlaufbereichs 24 oder auf dem Weg vom Behältereinlaufbereich 24 zum Behälterauslaufbereich 26 erfasst werden. Die Sensorik 100 kann beispielsweise kameragestützt sein und mittels einer Bilderkennung die Orientierung des Behälters 12 ermitteln. Alternativ kann die Sensorik 100 beispielsweise mindestens einen optischen Sensor (zum Beispiel Abstandsensor) aufweisen, der im Bereich der Behälterhalterung 46" angeordnet ist. Sofern der Behälter 12 eine rotationasymmetrische Form aufweist, kann dann basierend auf einem Messwert des optischen Sensors, zum Beispiel in Form eines Abstands zwischen dem optischen Sensor und dem Behälter 12, eine Orientierung des Behälters 12 ermittelt werden. Alternativ kann die Sensorik 100 beispielsweise eine Wägezelle aufweisen, die mit der Stützplatte 54' gekoppelt ist und mit der eine Gewichtsverteilung des Behälters 12 auf der Stützplatte 54' zum Erkennen einer Orientierung des Behälters 12 erfassbar ist.

Eine Antriebseinheit 102 kann zum Drehen der Stützplatte 54' antreibend mit der Stützplatte 54' verbunden sein. Beispielsweise kann die Antriebseinheit 102 über eine Stirnradstufe 104 und eine Antriebswelle 106 antreibend mit der Stützplatte 54' verbunden sein.

Die Antriebseinheit 102 kann unterhalb von der Tragplatte 34 angeordnet sein. Es kann ebenfalls die Stirnradstufe 104 unterhalb der Tragplatte 34 angeordnet sein. Die Antriebswelle 106 kann sich durch eines der Durchgangslöcher 44 erstrecken. Die Antriebswelle 106 kann sich durch die Stützeinrichtung 72 erstrecken. Ein freiliegender Abschnitt der Antriebswelle 106 unterhalb der Stützplatte 54' kann beispielsweise mittels einer Dichtung, zum Beispiel einer Torsionsmembran, abgedichtet sein.

Basierend auf einem Signal von der Sensorik 100 kann eine Steuereinheit (nicht dargestellt) die Antriebseinheit 102 derart betreiben, dass die Stützplatte 54' so von der Antriebseinheit 112 gedreht wird, dass der auf der Stützplatte 54' positionierte Behälter 12 in eine vorgegebene bzw. gewünschte Orientierung gedreht wird.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen. Insbesondere sind die einzelnen Merkmale des unabhängigen Anspruchs 1 jeweils unabhängig voneinander offenbart. Zusätzlich sind auch die Merkmale der Unteransprüche unabhängig von sämtlichen Merkmalen des unabhängigen Anspruchs 1 und beispielsweise unabhängig von den Merkmalen bezüglich des Vorhandenseins und/oder der Konfiguration der Behälterhalterungen und/oder der Betätigungseinrichtung des unabhängigen Anspruchs 1 offenbart.

**Bezugszeichenliste**

| | | | |
|---|---|---|---|
| 10 | Behälterbehandlungsanlage | 62 | Führungselement |
| 12 | Behälter | 64 | Schwenkarm |
| 14 | Transportstern | 66 | Koppelgestänge |
| 16 | Verschließvorrichtung | 68 | Bewegungspfad |
| 18 | Behälterförderer | 70 | Steuerkurve |
| 20 | Führungsgarnitur | 72 | Stützeinrichtungen |
| 22 | Ablenkelement | 74 | Aktor |
| 24 | Behältereinlaufbereich | 75 | Aktor |
| 25 | Bewegungspfad | 76 | Führungselement |
| 26 | Behälterauslaufbereich | 78 | Hubstange |
| 28 | Basis | 80 | Dichtung |
| 30 | Tragsäule | 82 | Zwischenplatte |
| 32 | Hauptantriebswelle | 84 | Verbindungsträger |
| 34 | Tragplatte | 86 | Halterung |
| 36 | Durchgangsloch | 88 | Stützplatte |
| 38 | Wandabschnitt | 90 | Spannelement |
| 40 | Hydraulische Dichtung | 92 | Elastisches Element |
| 42 | Bauteil | 94 | Steuerkurvensegment |
| 44 | Durchgangsloch | 96 | Aktor |
| 46 | Behälterhalterung | 97 | Schubelement |
| 48 | Betätigungseinrichtung | 98 | Dichtung |
| 50 | Höhenverstelleinrichtung | 100 | Sensorik |
| 52 | Greiferarm | 102 | Antriebseinheit |
| 54 | Stützplatte | 104 | Stirnradstufe |
| 56 | Schwenkachse | 106 | Antriebswelle |
| 58 | Steuerkurve | M | Mittelachse |
| 60 | Verbindungseinrichtung | | |

## Patentansprüche

1. Transportstern (14), vorzugsweise Absenkstern, zum Transportieren von Behältern (12), aufweisend:
mehrere Behälterhalterungen (46), die:
- um einen Umfang des Transportsterns (14) angeordnet sind, und
- umlaufend um eine Mittelachse (M) des Transportsterns (14) entlang eines, vorzugsweise verstellbaren, Bewegungspfads (25) bewegbar und dabei von einem, vorzugsweise höhenverstellbaren, Behältereinlaufbereich (24) des Bewegungspfads (25) zu einem, vorzugsweise höhenverstellbaren, Behälterauslaufbereich (26) des Bewegungspfads (25) absenkbar und/oder anhebbar sind; und eine Betätigungseinrichtung (48) mit:
- einer Steuerkurve (58), die als eine Zylindermantelfläche gebildet ist, und
- mehreren Verbindungseinrichtungen (60), die jeweils eine Wirkverbindung zwischen der Steuerkurve (58) und einer der mehreren Behälterhalterungen (46) zum Betätigen der jeweiligen Behälterhalterung (46) herstellen.

2. Transportstern (14) nach Anspruch 1 wobei:
die mehreren Verbindungseinrichtungen (60) jeweils ein Führungselement (62) aufweisen, das umlaufend um die Mittelachse (M) an der Steuerkurve (58) der Betätigungseinrichtung (48) entlang eines Bewegungspfads (68) geführt ist, der vorzugsweise abhängig von einem Höhenverlauf des Bewegungspfads (25) der mehreren Behälterhalterungen (46), einer Höhenposition des Behältereinlaufbereichs (24) und/oder einer Höhenposition des Behälterauslaufbereichs (26) veränderbar ist.

3. Transportstern (14) nach Anspruch 2, wobei:
ein Höhenverlauf des Bewegungspfads (25) der mehreren Behälterhalterungen (46) im Wesentlichen einem Höhenverlauf des Bewegungspfads (68) der mehreren Führungselemente (62) der mehreren Verbindungseinrichtungen (60) entspricht; und/oder
eine Verstellung eines Höhenverlaufs des Bewegungspfads (25) der mehreren Behälterhalterungen (46) eine Verstellung eines Höhenverlaufs des Bewegungspfads (68) der mehreren Führungselemente (62) der mehreren Verbindungseinrichtungen (60) bewirkt.

4. Transportstern (14) nach Anspruch 2 oder Anspruch 3 wobei:
die mehreren Verbindungseinrichtungen (60) jeweils mindestens einen Schwenkarm (64) aufweisen, der das Führungselement (62) der jeweiligen Verbindungseinrichtung (60) um eine, vorzugsweise im Wesentlichen vertikale oder horizontale, Achse schwenkbar lagert; und/oder
die mehreren Verbindungseinrichtungen (60) jeweils ein Koppelgestänge (66) aufweisen, das eine Radialbewegung des Führungselements (62) der jeweiligen Verbindungseinrichtung (60) bezüglich der Mittelachse (M) zu einer Vertikalbewegung zum Betätigen der jeweiligen Behälterhalterung (46) wandelt.

5. Transportstern (14) nach einem der vorherigen Ansprüche, wobei mindestens eines der nachfolgenden Merkmale erfüllt ist:
die mehreren Behälterhalterungen (46) weisen jeweils mindestens einen Greiferarm (52) auf, der zum Greifen und/oder Freigeben der Behälter (12) mittels der Betätigungseinrichtung (48) verschwenkbar und/oder verschiebbar ist;
die mehreren Behälterhalterungen (46') weisen jeweils mindestens ein Spannelement (90) auf, das zum Einspannen und/oder Freigeben der Behälter (12) mittels der Betätigungseinrichtung (48) vertikal bewegbar ist; und
die mehreren Behälterhalterungen (46) weisen jeweils eine Stützplatte (54, 88) zum bodenseitigen Abstützen der Behälter (12) oder zum Abstützen eines Behälterhalsrings der Behälter (12) auf.

6. Transportstern (14) nach einem der vorherigen Ansprüche, ferner aufweisend:
eine Höhenverstelleinrichtung (50), die zum Verstellen eines Höhenverlaufs des Bewegungspfads (25) der Behälterhalterungen, einer Höhenposition des Behältereinlaufbereichs (24) und/oder einer Höhenposition des Behälterauslaufbereichs (26) ausgebildet ist.

7. Transportstern (14) nach Anspruch 6, wobei die Höhenverstelleinrichtung (50) aufweist:
eine, vorzugsweise ringförmige, Steuerkurve (70);
mehrere Stützeinrichtungen (72), die eine Wirkverbindung zwischen einer Höhenposition der mehreren Behälterhalterungen (46) und der Steuerkurve (70) herstellen, und optional
mindestens einen Aktor (74, 75), der mit der Steuerkurve (70) der Höhenverstelleinrichtung (50) zum Anpassen einer Neigung und/oder einer Höhe der Steuerkurve (70) der Höhenverstelleinrichtung (50) verbunden ist, vorzugsweise zum Verstellen eines Höhenverlaufs des Bewegungspfads (25) der mehreren Behälterhalterungen (46), einer Höhenposition des Behältereinlaufbereichs (24) und/oder des Behälterauslaufbereichs (26).

8. Transportstern (14) nach Anspruch 7, wobei mindestens eines der nachfolgenden Merkmale erfüllt ist:
die mehreren Stützeinrichtungen (72) weisen jeweils einen, vorzugsweise rohrförmigen, Abschnitt auf, der koaxial zu einem Abschnitt der mehreren Verbindungseinrichtungen (60) angeordnet ist;
die mehreren Stützeinrichtungen (72) weisen jeweils ein Führungselement (76) auf, das umlaufend um die Mittelachse (M) auf der Steuerkurve (70) der Höhenverstelleinrichtung (50) geführt ist;
ein Höhenverlauf der Steuerkurve (70) der Höhenverstelleinrichtung (50) gibt einen Höhenverlauf des Bewegungspfads (25) der mehreren Behälterhalterungen (46) vor; und
die mehreren Stützeinrichtungen (72) sind abgestützt auf der Steuerkurve (70) der Höhenverstelleinrichtung (50) und stützen jeweils eine der mehreren Behälterhalterungen (46) von unten ab.

9. Transportstern (14) nach einem der vorherigen Ansprüche, ferner aufweisend:
eine, vorzugsweise im Wesentlichen scheibenförmige, Tragplatte (34) mit mehreren, vorzugsweise abgedichteten, Durchgangslöchern (44), die eine Unterseite der Tragplatte (34) mit einer Oberseite der Tragplatte (34) verbinden,
wobei:
die mehreren Behälterhalterungen (46) oberhalb der Tragplatte (34) angeordnet sind,
die Steuerkurve (58) der Betätigungseinrichtung (48) unterhalb der Tragplatte (34) angeordnet ist; und
die mehreren Verbindungseinrichtungen (60) sich durch die mehreren Durchgangslöcher (44) hindurch erstrecken.

10. Transportstern (14) nach Anspruch 9 und einem der Ansprüche 7 oder 8, wobei:
die mehreren Stützeinrichtungen (72) sich durch die mehreren Durchgangslöcher (44) erstrecken; und
die Steuerkurve (70) der Höhenverstelleinrichtung (50) unterhalb der Tragplatte (34) angeordnet ist, vorzugsweise unterhalb von der Steuerkurve (58) der Betätigungseinrichtung (48).

11. Transportstern (14) nach Anspruch 9 oder 10, wobei:
die Tragplatte (34) an der Unterseite der Tragplatte (34) mehrere ringförmige, einander umgebende Wandabschnitte (38) für eine hydraulische Dichtung (40), vorzugsweise ein Wasserschloss, aufweist, wobei die Wandabschnitte (38) vorzugsweise im Wesentlichen koaxial zu der Mittelachse (M) angeordnet sind.

12. Transportstern (14) nach einem der vorherigen Ansprüche, wobei:
eine Form der Steuerkurve (58) der Betätigungseinrichtung (48), vorzugsweise flexibel, anpassbar ist, und optional
die Steuerkurve (58) der Betätigungseinrichtung (48) mindestens ein manuell oder mittels mindestens eines Aktors (96) bewegbares Steuerkurvensegment (94) aufweist.

13. Transportstern (14) nach einem der vorherigen Ansprüche, wobei:
die mehreren Behälterhalterungen (46") jeweils ein Schubelement (97) zum Ausschieben des Behälters (12) aus der jeweiligen Behälterhalterung (46") aufweisen; und optional
die Schubelemente (97) mittels der Betätigungseinrichtung (48) betätigbar, besonders bevorzugt ein- und/oder ausschiebbar, sind.

14. Transportstern (14) nach einem der vorherigen Ansprüche, ferner aufweisend:
eine Sensorik (100), vorzugsweise eine Wägezelle oder eine optische Erfassungseinrichtung, wobei die Sensorik (100) dazu ausgebildet ist, eine Information zu erfassen, die eine Orientierung eines zu orientierenden Behälters (12) der mehreren Behälter (12) angibt;
eine Antriebseinheit (102), die zum Drehen einer Stützplatte (54') der mehreren Behälterhalterungen (46") mit der Stützplatte (54') verbunden ist; und
eine Steuereinheit, die dazu konfiguriert ist, in Abhängigkeit von der erfassten Information der Sensorik (100) die Antriebseinheit (102) zum Drehen der Stützplatte (54') zu steuern, sodass vorzugsweise der zu orientierende Behälter (12) in eine vorgegebene Orientierung gedreht wird.

15. Behälterbehandlungsanlage (10) aufweisend:
einen Transportstern (14) nach einem der vorherigen Ansprüche,
wobei die Behälterbehandlungsanlage (10) ferner aufweist:
eine Verschließvorrichtung (16), vorzugsweise Verschließerkarussell, zum Verschließen der Behälter (12), wobei die Verschließvorrichtung (16) zum Übergeben der Behälter (12) zu dem Behältereinlaufbereich (24) angeordnet ist; und/oder
einen Behälterförderer (18), vorzugsweise Band- oder Mattenförderer, wobei der Behälterförderer (18) zum Übernehmen der Behälter (12) von dem Behälterauslaufbereich (26) angeordnet ist.
